Europäisches Patentamt

European Patent Office

Office européen des brevets

(19)

(11) Veröffentlichungsnummer: **0 163 164 B1**

(12) **EUROPÄISCHE PATENTSCHRIFT**

(45) Veröffentlichungstag der Patentschrift: **09.10.91**

(51) Int. Cl.5: **H04N 9/78**

(21) Anmeldenummer: **85105437.9**

(22) Anmeldetag: **03.05.85**

(54) **System zur Decodierung von Farbfernsehsignalen mit quadraturmoduliertem Farbhilfsträger.**

(30) Priorität: **19.05.84 DE 3418789**

(43) Veröffentlichungstag der Anmeldung:
**04.12.85 Patentblatt 85/49**

(45) Bekanntmachung des Hinweises auf die
Patenterteilung:
**09.10.91 Patentblatt 91/41**

(84) Benannte Vertragsstaaten:
**BE DE FR GB NL**

(56) Entgegenhaltungen:
**US-A- 4 268 855**

**FERNSEH- UND KINOTECHNIK, Band 37,
Nr.12, Dezember 1983, Seiten 511-519, Berlin,
DE; H.-P. RICHTER: "Verfahren zur digitalen
Decodierung des PAL-Signals"**

(73) Patentinhaber: **BTS Broadcast Television Systems GmbH
Robert-Bosch-Strasse 7
W-6100 Darmstadt(DE)**

(72) Erfinder: **Richter, Hans-Peter
Bessungerstrasse 186h
W-6103 Griesheim(DE)**
Erfinder: **Noske, Reiner
Humboldtweg 4
W-6100 Darmstadt(DE)**
Erfinder: **Illetschko, Gerhard
Liebigstrasse 51
W-6100 Darmstadt(DE)**

## Beschreibung

Die Erfindung geht aus von einem System zur Decodierung von Farbfernsehsignalen mit quadraturmoduliertem Farbhilfsträger.

Zur Decodierung von Farbfernsehsignalen mit quadraturmoduliertem Farbhilfsträger sind sogenannte Kammfilterdecodierer bekannt. In diesen werden zur Trennung von Leuchtdichte- und Farbinformation anstelle einfacher Hochpaß/Tiefpaß-Anordnungen Kammfilter verwendet.

Bei der Trennung der Komponenten mit Hilfe von Kammfiltern bleiben zwar die höherfrequenten Anteile des Luminanzsignals im Luminanzsignal enthalten, so daß die Auflösung des wiedergegebenen Bildes der vollen Bandbreite, welche zur Übertragung des Farbfernsehsignals zur Verfügung steht, entspricht; es entstehen jedoch andere Fehler. So wird beispielsweise bei einem Zeilenkammfilter vorausgesetzt, daß der Bildinhalt zweier zeitlich aneinanderfolgender Zeilen gleich ist. Wenn dieses nicht der Fall ist, also wenn horizontale Kanten vorliegen, entstehen Störungen. Auch eine Beschränkung der Zeilenkammfilterung auf den höherfrequenten Bereich führt nicht zu einer fehlerfreien Trennung. Hierbei treten an schrägen Kanten Fehler auf.

Diese Fehler können mit Vollbildkammfiltern vermieden werden, welche jedoch nur für ruhende Bildvorlagen fehlerfrei arbeiten. Ähnlich wie bei den Zeilenkammfiltern durch Kanten, treten hier Fehler bei Vorliegen von Bewegung im Bildinhalt auf.

In der älteren deutschen Patentanmeldung DE-A1-3 313 050 (veröffentlicht am 18-10-84) der gleichen Anmelderin ist daher bereits eine Anordnung zur Trennung der Leuchtdichte- und der Farbinformation eines Farbfernsehsignals angegeben, mit welcher die oben angegebenen Fehler vermieden werden. Die Anordnung umfaßt ein Vollbild- und ein Zeilenkammfilter sowie ggfs. eine Hochpaß/Tiefpaß-Aufspaltung und eine Schaltung zum Erkennen bewegter Bilder. Dabei wird die Leuchtdichte- und die Farbartinformation abhängig von dem jeweils vorliegenden Bildinhalt sowie von Kanten und Bewegungen in diesen nach der günstigsten Methode getrennt.

Aus der DE-A-31 21 597 ist ein System zur Verminderung des Rauschens in einem Fernsehsignal bekannt, das einen Vollbildspeicher und einen Bewegungsdetektor aufweist. Das die Bewegung darstellende Signal wird durch Differenzbildung zwischen dem um ein Vollbild verzögerten und dem unverzögerten Fernsehsignal gewonnen und über einen Tiefpaß und/oder eine Schwellwertschaltung geleitet, dessen Grenzfrequenz bzw. deren Schwellwert als Funktion der Rauschamplitude steuerbar ist. Damit werden die Nachteile anderer bekannter Systeme, welche eine nur unzureichende Differenzierung zwischen den durch das Rauschen bedingten Unterschieden aufeinanderfolgender Vollbilder und Bewegungsunterschieden erlauben, vermieden und eine optimale Anpassung an die Rauschverhältnisse im Eingangssignal erreicht. Bei kleiner Rauschamplitude im Eingangssignal treten keine störenden Bewegungsunschärfen auf, während bei größeren Rauschamplituden eine Eigensteuerung der Rauschreduktion durch das Rauschen selbst verhindert wird.

Grundsätzlich ist es bekannt (US-A-4,058,836), die Differenz zwischen dem unverzögerten und dem verzögerten Fernsehsignal zu bilden und das Ergebnis über eine Schwellwertschaltung zu leiten. Dabei geht man davon aus, daß das Rauschen im Fernsehsignal relativ gering ist, während sich bei Bewegungen größere Differenzen ergeben, welche weitergeleitet werden und das System zur Verminderung des Rauschens derart steuern, daß deren Wirkung vermindert wird. Dieses System hat den Nachteil, daß Bewegungen in kontrastarmen Szenen nicht berücksichtigt werden und damit wie das Rauschen dem Reduktionsvorgang unterworfen werden. Somit erscheinen sich bewegende Kanten unscharf.

Das erfindungsgemäße System zur Decodierung von Farbfernsehsignalen nach dem unabhängigen Anspruch hat demgegenüber den Vorteil, daß bei ruhenden Bildvorlagen kreuzweise Störungen des Leuchtdichte- und des Farbartsignals völlig vermieden werden. Als weiterer Vorteil ist anzusehen, daß eine sehr gute Rauschunterdrückung erzielt wird.

Durch die in den abhängigen Ansprüchen aufgeführten Maßnahmen sind vorteilhafte Weiterbildungen und Verbesserungen des im Hauptanspruch angegebenen Systems möglich. Besonders vorteilhaft ist, daß auch für bewegte Bildvorlagen eine zusätzliche Rauschunterdrückung erfolgt und kreuzweise Störungen zwischen Leuchtdichte- und Farbartsignal infolge unterschiedlicher temporärer Frequenzgänge auch bei bewegten Bildvorlagen abgeschwächt werden. Schließlich ist vorteilhaft, daß für die Bewegungserkennung ein zeitlich früher liegendes Steuersignal erzeugt wird, wodurch die Bewegungserkennung verbessert wird.

Ein Ausführungsbeispiel der Erfindung ist in der Zeichnung dargestellt und in der nachfolgenden Beschreibung näher erläutert. Es zeigen

Fig. 1     als Blockschaltbild das System zur Decodierung von Farbfernsehsignalen,

Fig. 2     das Blockschaltbild eines Bewegungs- und Kantendetektors aus der Anordnung nach Fig. 1,

Fig. 3     das Blockschaltbild des Rauschverminderungssystems nach Fig. 1,

Fig. 4     Frequenzgänge der Bewegungsdetektoren aus Fig. 1.

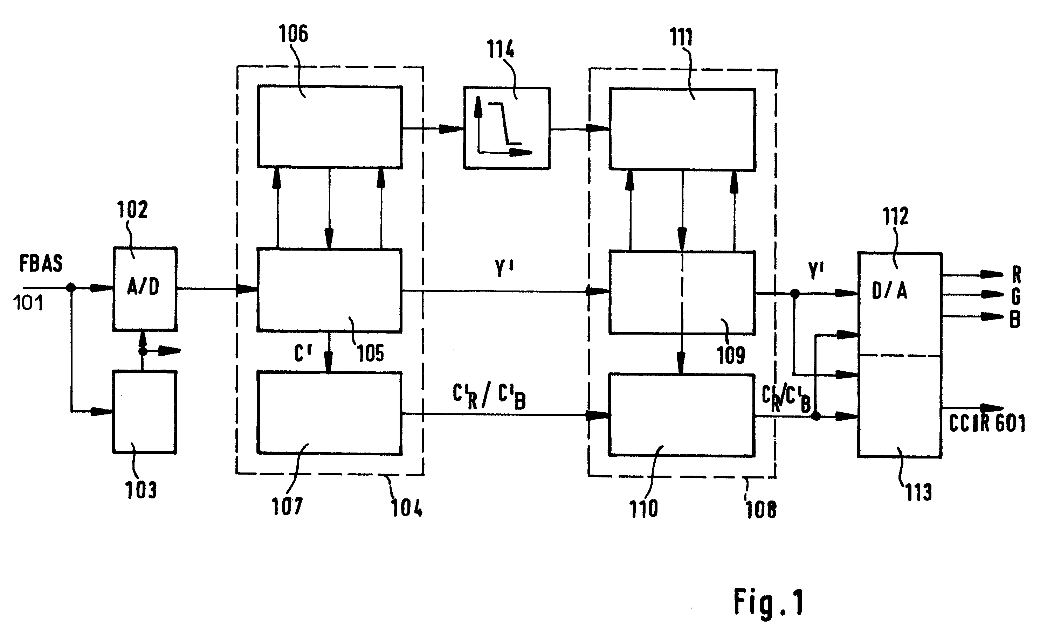

In Fig. 1 wird das am Eingang 101 eingehende codierte Farbfernsehsignal zunächst einem Analog/Digital-Wandler 102 zur Umwandlung in ein digitalcodiertes Farbfernsehsignal zugeführt. Gleichzeitig gelangt das codierte Farbfernsehsignal zu einer Synchronisiereinrichtung 103, in der die im Farbfernsehsignal enthaltenen Synchronanteile erkannt und außerdem die Abtastfrequenz(13,5 MHz)gewonnen wird. Das in ein digitalcodiertes Signal gewandelte Farbfernsehsignal gelangt vom A/D-Wandler 102 zu einer Decodiereinrichtung 104, die im wesentlichen ein adaptives PAL-Kammfilter 105 und einen mit diesem zusammenarbeitenden Bewegungs- und Kantendetektor 106 umfaßt. An den Ausgang des adaptiven PAL-Kammfilters 105 ist ein Demodulator 107 zur Demodulation des Farbartsignals angeschlossen. Der Decodiereinrichtung 104 ist ein System zur Verminderung des Rauschens 108 nachgeschaltet, das im wesentlichen aus einem Rauschbefreier 109 für das digital vorliegende Leuchtdichtesignal Y', einem Rauschbefreier 110 für die digital vorliegenden demodulierten Farbartsignalanteile $C'_R/C'_B$ und aus einem mit beiden zusammenwirkenden Bewegungsdetektor 111 besteht.

Die Decodiereinrichtung 104 ist Gegenstand der früheren Patentanmeldung DE-A1-3 313 050, die Rauschbefreiungseinrichtung 108 ist Gegenstand der DE-OS 31 21 597, die beide auf den Namen der gleichen Anmelderin angemeldet wurden.

Die Ausgänge der Rauschbefreiungseinrichtungen 109 für das Leuchtdichtesignal und 110 für die Farbartsignalanteile sind beide parallel mit einem D/A-Wandler 112 verbunden, in dem das digitalcodierte Farbfernsehsignal in ein analoges rückgewandelt und gleichzeitig durch Dematrizierung die Komponenten R, G und B gewonnen werden. Die Ausgänge der Einrichtungen 109 und 110 sind gleichzeitig parallel mit einer digitalen Interface-Schaltung 113 verknüpft, in der ein der CCIR-Norm Empfehlung 601 entsprechendes digitales Signal erzeugt wird.

Die beiden Bewegungsdetektoren 106 und 111 sind über eine Schwellwertschaltung 114 miteinander verbunden, die beispielsweise durch einen PROM-Baustein realisiert sein kann. Die Kennlinie dieses Bausteins ist so gewählt, daß vom Bewegungsdetektor 106 eingehende kleine Bewegungssignale ungedämpft durchgelassen werden, während große Bewegungssignale vom Ausgang des Bewegungsdetektors 106 gedämpft werden. Auf diese Weise wird ein Überlaufen des digital arbeitenden Bewegungsdetektors 111 vermieden und die Anordnung weiterer Multiplikationsglieder zur Bewertung der Bewegungssignale überflüssig. Es ist auch gar nicht erwünscht, daß bei großem Bewegungssignal, bei dem die Bewegungsdetektion des Rauschminderungssystems 108 ausreichend ist, bei bewegter Bildvorlage durch ein zusätzliches, zeitlich verschobenes, Bewegungssignal die Zone geringer Rauschminderung zu vergrößern.

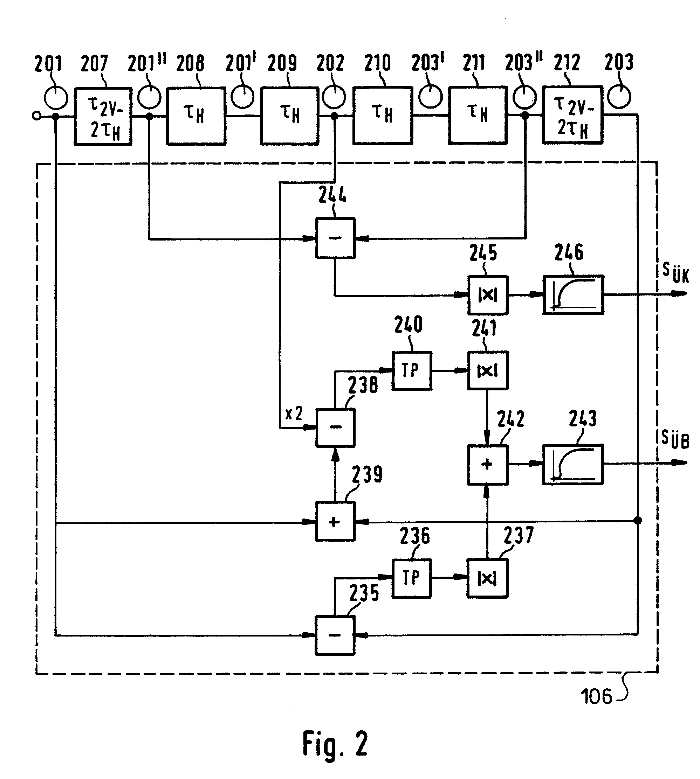

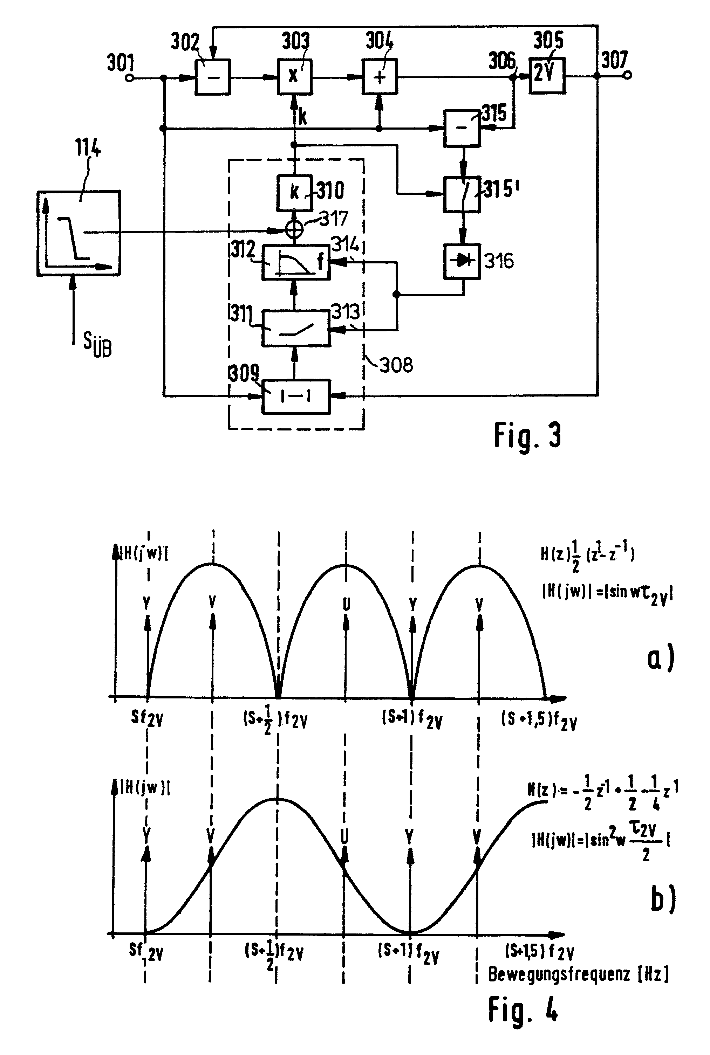

Fig. 2 zeigt den Bewegungs- und Kantendetektor 106 (Fig. 1) sowie die Verzögerungskette. Hierbei dienen die Schaltungsblöcke 235, 236 und 237 als Filter mit einem Frequenzgang gemäß Fig. 4a und die Schaltungsblöcke 238 bis 241 als Filter mit einem Frequenzgang nach Fig. 4b. Im einzelnen sei hierzu erläutert, daß in der Subtraktionsschaltung 235 die von den Abgriffen 201 und 203 der Verzögerungskette 207 bis 212 abgenommenen Signale subtrahiert werden. Das Ausgangssignal der Subtraktionsschaltung 235 wird dann einem Tiefpaßfilter 236 zugeführt und anschließend über eine Schaltung zur Betragsbildung 237 einer Und-Schaltung 242 zugeleitet. Mit Hilfe der Additionsschaltung 239 werden die Signale von den Abgriffen 201 und 203 der Verzögerungskette 207 bis 212 addiert und von dem doppelten Wert des Signals vom Abgriff 202 mit Hilfe der Subtraktionsschaltung 238 abgezogen. Das Ergebnis wird über ein Tiefpaßfilter 240 und eine Schaltung zur Betragsbildung 241 zu einem weiteren Eingang der Addierschaltung 242 geleitet. Hierdurch wird eine Überlagerung der in den Figuren 4a und 4b gezeigten Kennlinie erreicht, so daß einerseits bereits langsame Bewegungen erkannt werden können und andererseits nicht bereits bei 12,5 Hz Bewegungsfrequenz eine Nullstelle vorliegt. Der Ausgang der Addierschaltung 242 ist mit dem Eingang einer nichtlinearen Schaltung 243 verbunden. Die Schaltung 243 weist etwa die in der Fig. 2 dargestellte Kennlinie auf und dient dazu, bereits ein Bewegungssignal $S_{ÜB}$ zu erzeugen, wenn einerseits langsame Bewegungen vorliegen und andererseits wenig kontrastreiche Bilddetails bewegt sind. Die Erkennung von horizontalen Kanten erfolgt durch Subtraktion der Signale an den Abgriffen 201" und 203" mit Hilfe der Subtraktionsschaltung 244, deren Ausgangssignal über Schaltung zur Betragsbildung 245 und eine Schaltung 246 mit einer der der Schaltung 243 ähnlichen Kennlinie zum Ausgang $S_{ÜK}$ geleitet wird. Die Verbindung des Ausgangs $S_{ÜB}$ des Bewegungsdetektors 106 der Decodiereinrichtung 104 (Fig. 1) mit dem Eingang des Bewegungsdetektors 111 des Rauschminderungssystems 108 über das Bewertungsglied 114 hat außer der additiven Wirkung noch eine überraschende zeitliche Wirkung indem der Bewegungsdetektor 111 bereits ein aufbereitetes Bewegungssignal erhält und zwar zeitlich, bevor er selbst die Bewegung im Eingangssignal detektiert.

Der Schaltungsanordnung nach Fig. 3 wird dazu bei 301 das Fernsehsignal, dessen Rauschanteil reduziert werden soll, zugeführt. Über die Addierschaltung 304 gelangt es zu einer Verzögerungseinrichtung 305, welche das Fernsehsignal um die Dauer eines Vollbildes verzögert. Derartige Verzögerungseinrichtungen sind hinreichend bekannt und werden in vorteilhafter Weise mit Hilfe eines digitalen Vollbildspeichers realisiert. Das am Ausgang der Verzögerungseinrichtung 305 anstehende verzögerte Signal wird zu einer Subtrahierschaltung 302 geführt, mit deren Hilfe von dem verzögerten Signal das unverzögerte subtrahiert wird. Der Ausgang der Subtrahierschaltung 302 ist über eine Multiplizierschaltung 303 mit einem weiteren Eingang der Addierschaltung 304 verbunden. Somit wirkt die aus den Schaltungen 302, 303 304, 305 bestehende Anordnung als sogenanntes rekursives Filter, welches die nicht von Vollbild zu Vollbild wiederkehrenden Signalamplituden mittelt und somit reduziert.

Durch einen der Multiplizierschaltung 303 zugeführten Faktor k wird der Grad dieser Mittelung bestimmt. Je mehr sich k dem Wert 1 nähert, desto stärker ist die Wirkung des Filters, umso größer ist die Zeit, über die die Mittelung (Integration) erfolgt. An den Schaltungspunkten 306 oder 307 kann das Fernsehsignal mit reduziertem Rauschen abgenommen werden. Bei unbewegten Bildern ist eine praktisch unbegrenzte Rauschreduzierung möglich, wenn eine beliebig lange Integration stattfindet.

Bei bewegten Bildern führt die Integration jedoch zu Unschärfen an Kanten, so daß sie zu vermindern ist, wenn im Bild Bewegungen auftreten. Hierzu ist ein sogenannter Bewegungsdetektor 308 vorgesehen. Dieser besteht im wesentlichen aus einer Differenzbildungseinrichtung 309, mit deren Hilfe die Differenz zwischen dem unverzögerten und dem verzögerten Signal gebildet wird. Da die Beeinflussung auf die Rauschverminderung vom Vorzeichen der Änderungen des Bildinhalts unabhängig sein soll, wird von der Differenz in der Einrichtung 309 der Betrag gebildet. Je nach Größe der Änderungen wird in der Schaltung 310 ein Korrekturfaktor k für den Grad der Rauschreduzierung erzeugt. Da außer Bewegungen auch Rauschen zu einem Ausgangssignal der Einrichtung 309 führt, welches jedoch nicht zur Steuerung des Integrationsvorganges herangezogen werden soll, sind zwischen die Einrichtung 309 und die Schaltung 310 eine Schwellwertschaltung 311 und ein Tiefpaß 312 geschaltet. Wie eingangs beschrieben, werden die Schwellwertschaltung 311 und der Tiefpaß 312 von einer bei 313 bzw. 314 zugeführten Steuerspannung gesteuert. Diese Steuerspannung entspricht der durchschnittlichen Amplitude des im Eingangssignal enthaltenen Rauschens und wird durch die Subtraktionsschaltung 315 sowie eine anschliessende Gleichricht- und Integrationsschaltung 316 abgeleitet. Einzelheiten hierzu sind in der Patentanmeldung DE-A1-3 121 611 erläutert.

Zwischen den Tiefpaß 312 und die Schaltung 310 zur Bildung des Korrekturfaktors ist eine Addierschaltung 317 geschaltet, deren zweiter Eingang die bewerteten Bewegungssignale vom Ausgang der Bewertungsschaltung 114 (Fig. 1) empfängt.

Ist das Rauschen im Eingangssignal relativ klein, so wird das Ausgangssignal der Einrichtung 309 durch die Schaltung 311 und den Tiefpaß 312 wenig beeinflußt, das heißt, die Schwelle der Schwellwertschaltung 311 ist niedrig und die Grenzfrequenz des Tiefpasses 312 ist hoch, beispielsweise 2,5 MHz. In diesem Betriebszustand wird das Rauschen reduziert, ohne daß eine Beeinträchtigung der Bildschärfe bei Bildbewegungen auftritt. Werden jedoch der Anordnung nach Fig. 3 Fernsehsignale mit stärkerem Rauschanteil zugeführt, so wird die Grenzfrequenz des Tiefpasses 312 verringert und die Schwelle der Schaltung 310 erhöht. In diesem Fall tritt zwar ebenfalls die gewünschte Störabstandsverbesserung ein; bei Bewegungen ist jedoch eine Unschärfe der Kanten in Kauf zu nehmen.

## Patentansprüche

1. System zur Decodierung von Farbfernsehsignalen mit quadraturmoduliertem Farbhilfsträger mit einer Anordnung (104) zur Trennung von Leuchtdichte- und Farbinformation, in der ein adaptives PAL-Kammfilter (105) mit einer Verzögerungseinrichtung (207 bis 212) für das Farbfernsehsignal von zwei Vollbildperioden mit einem Mittelabgriff (202) und im Abstand einer Zeilenperiode weiterer Abgriffen (201'', 203'') vorgesehen ist, welche zusätzlich an einen Bewegungsdetektor (106) angeschlossen sind, und einem System (108) zur Verminderung des Rauschens, bei welchem ebenfalls eine Verzögerung (305) um eine Vollbildperiode vorgesehen ist und das verzögerte Fernsehsignal nach Bewertung mit einem Korrekturfaktor (K) dem ebenfalls bewerteten unverzögerten hinzuaddiert wird und bei welchem ferner durch Vergleich des verzögerten und des unverzögerten Fernsehsignals ein Bewegungssignal erzeugt wird, welches die Größe des Korrekturfaktors bestimmt, mit einer Bewertungseinrichtung (114) zur Bewertung der Größe der Bewegungssignale zwischen dem Bewegungsdetektor (106) der Anordnung (104) zur Trennung von Leuchtdichte- und Farbinformation und dem Bewegungsdetektor (111) des Systems (108) zur Verminderung des Rauschens.

2. System zur Decodierung von Farbfernsehsignalen nach Anspruch 1, dadurch gekennzeichnet, daß die Bewertungs einrichtung (114) eine Kennlinie aufweist, welche kleine Bewegungssignale ungedämpft durchläßt und große Bewegungssignale nur gedämpft an den Bewegungsdetektor (111) weiterleitet.

3. System zur Decodierung von Farbfernsehsignalen nach Anspruch 2, dadurch gekennzeichnet, daß die Bewertungs einrichtung (114) ein PROM-Baustein ist.

## Claims

1. System for the decoding of television signals with quadrature modulated chrominance subcarrier with an arrangement(104) for the separation of luminance information and chrominance information, in which an adaptive PAL comb filter (105) with a delay means (207 to 212) for the colour television signal of two picture periods is provided, with a centre tap (202) and at a distance of one line period further taps (201", 203"), which are in addition connected to a motion detector (106), and to a system (108) for noise reduction, at which also a delay (305) of a picture period is provided and the delayed television signal, after weighting with a correction factor (K) is added to the also weighted undelayed signal and in which further by comparison of the delayed and undelayed television signals a motion signal is produced, which determines the value of the correction factor, including a weighting means (114) for weighting the value of the motion signals between the motion detector (106) of the arrangement (104) for the separation of luminance information and chrominance information and the motion detector (111) of the system (108) for noise reduction.

2. System for the decoding of colour television signals according to claim 1, characterized in that the weighting means (114) has a characteristic which allows small motion signals to pass unattenuated and passes on large motion signals only attenuated to the motion detector (111).

3. System for the decoding of colour television signals according to claim 2, characterized in that the weighting means(114) is a PROM component.

## Revendications

1. Système pour le décodage de signaux de télévision en couleurs avec un support auxiliaire de couleur à modulation en quadrature avec un dispositif (104) pour séparer les informations de brillance et les informations de couleur, dans lequel un filtre de crête-PAL adaptable avec un dispositif de décalage (207 à 212) pour le signal de télévision en couleurs de deux périodes d'images complètes est prévu avec une prise médiane (202) et à intervalle d'une période de lignes d'autres prises (201", 203"), qui sont reliées en outre à un détecteur de mouvement (106), et avec un système (108) pour la diminution du bruit, dans lequel il est justement prévu un décalage (305) d'une période d'image complète et le signal de télévision décalé est additionné après affectation d'un facteur de correction (K) au signal non décalé également affecté et dans lequel en outre pour comparer le signal de télévision décalé et le signal de télévision non décalé, un signal de mouvement est produit, signal qui détermine la grandeur du facteur de correction, avec un dispositif d'évaluation (114) pour l'évaluation de la grandeur du signal de mouvement entre le détecteur de mouvement (106) du dispositif (104) pour la séparation des informations de brillance et de couleurs et le détecteur de mouvement (111) du système (108) par la diminution du bruit.

2. Système pour le décodage de signaux de télévision en couleurs, selon la revendication 1, caractérisé en ce que le dispositif d'évaluation (114) présente une courbe caractéristique, qui laisse passer de petits signaux de mouvement sans les amortir et ne transmet des grands signaux de mouvement au détecteur de mouvement (111) qu'amortis.

3. Système de décodage de signaux de télévision en couleurs selon la revendication 2, caractérisé en ce que le dispositif d'évaluation (114) est un bloc modulaire PROM.

Fig.1

FBAS

101

102
A/D

103

106

105
C'

107        104

114

Y'

C'R / C'B

111

109

110        108

112
D/A

113

Y'

C'R/C'B

R
G
B

CCIR 601

EP 0 163 164 B1

6

**Fig. 2**

Fig. 3

$$H(z)\frac{1}{2}(z^1 - z^{-1})$$

$$|H(jw)| = |\sin w\tau_{2V}|$$

a)

$sf_{2V}$ $(S+\frac{1}{2})f_{2V}$ $(S+1)f_{2V}$ $(S+1,5)f_{2V}$

$$H(z) = -\frac{1}{2}z^{-1} + \frac{1}{2} - \frac{1}{4}z^{1}$$

$$|H(jw)| = |\sin^2 w\frac{\tau_{2V}}{2}|$$

b)

$sf_{2V}$ $(S+\frac{1}{2})f_{2V}$ $(S+1)f_{2V}$ $(S+1,5)f_{2V}$

Bewegungsfrequenz [Hz]

Fig. 4

8